# EUROPEAN PATENT APPLICATION

(11) **EP 3 252 491 A1**
(43) Date of publication of application: **06.12.2017**
(21) Application number: 16172675.7
(22) Date of filing: 02.06.2016
(51) Int. Cl.: G01S 3/02

(54) **AN APPARATUS AND ASSOCIATED METHODS**

(71) Applicant: Nokia Technologies Oy, 02610 Espoo (FI)
(72) Inventor: Cricri, Francesco, 33200 Tampere (FI); Leppänen, Jussi Artturi, 33580 Tampere (FI); Eronen, Antti Johannes, 33820 Tampere (FI); Lehtiniemi, Arto Juhani, 33880 Lempäälä (FI)
(74) Representative: Potter Clarkson LLP

(57) **Abstract**

An apparatus caused to, in respect of determination of a direction towards an object in a space, the object having a tag capable of emitting a wireless signal for reception by a locator of a positioning system configured to determine the direction towards the tag based on the wireless signal,
based on object orientation information comprising the orientation of the object as viewed by a camera capturing visual imagery of the space and predetermined tag position information comprising the position on the object where the tag is attached,
provide for determination of at least whether or not the object is oriented such that the tag substantially faces the locator and thereby control of the positioning system in the determination of at least a viability of the wireless signal for determining the direction towards the object, the tag substantially facing the locator indicative of the viability of the wireless signal.

## Description

### Technical Field

The present disclosure relates to the field of direction determination of an object, associated methods, computer programs and apparatus. Certain disclosed aspects/examples relate to the use of the orientation of an object based on visual imagery to provide for determination of the viability of a wireless signal received from a tag attached to the object for determining the direction to the object.

### Background

Positioning systems are used to determine the position of an object in a space. The positioning system may use at least one locator in the space that is configured to receive a wireless signal from a positioning tag attached to the object in order to determine the direction towards the object. The wireless signal may be affected by its propagation through the space to the locator such as by attenuation by the object itself and attenuation/reflection from further objects in the space, which may negatively affect the accuracy of the direction determined by the positioning system.

The listing or discussion of a prior-published document or any background in this specification should not necessarily be taken as an acknowledgement that the document or background is part of the state of the art or is common general knowledge. One or more aspects/examples of the present disclosure may or may not address one or more of the background issues.

### Summary

In a first example aspect there is provided an apparatus comprising:
at least one processor; and
at least one memory including computer program code,
the at least one memory and the computer program code configured to, with the at least one processor, cause the apparatus to perform at least the following:
   in respect of determination of a direction towards an object in a space, the object having a positioning tag attached thereto capable of emitting a wireless signal for reception by at least one locator of a positioning system, the positioning system configured to determine the direction towards the positioning tag based on the wireless signal and thereby the direction of the object, and wherein the object is free to move around the space,
   based on object orientation information comprising the orientation of the object as viewed by a camera capturing visual imagery of the space in which the object is present and predetermined tag position information comprising the position on the object where the positioning tag is attached,
   provide for determination of at least whether or not the object is oriented such that the positioning tag substantially faces the locator to thereby provide for control of the positioning system in the determination of at least a viability of the wireless signal for determining the direction towards the object, the positioning tag substantially facing the locator indicative of the viability of the wireless signal.

In one or more examples, the apparatus is caused to determine at least whether or not the object is oriented such that the tag substantially faces the locator by a determination that the object does not block a line of sight between the tag and the locator.

In one or more embodiments, based on a determination that the object is oriented such that the tag substantially faces away from the locator and thereby that the wireless signal from said tag is not viable for use in determining the direction by the positioning system, provide for determination of the direction towards the object by means other than those that use the wireless signal.

In one or more examples, at least when the wireless signal is not viable, the apparatus is caused to provide for determination of the direction towards the object based on visual tracking of the object using the visual imagery from the camera.

In one or more embodiments, the object comprises a person and determination of at least whether or not the object is oriented such that the tag substantially faces the locator is based on one or more of;
i) face detection;
ii) body orientation detection;
iii) skeletal motion tracking.

In one or more examples, the apparatus is configured to provide for determination of the orientation of the object based on a predetermined model of the shape of the object such that the appearance of the object in the visual imagery can be compared to the model and an orientation determined.

In one or more embodiments, the object is provided with more than one tag comprising at least a first tag and a second tag, the first and second tags attached at different positions on the object, and wherein the predetermined tag position information comprises the position on the object where the first tag is attached and the position on the object where the second tag is attached, the apparatus caused to provide for determination of which of the first tag and the second tag substantially faces the locator to thereby provide for control of the positioning system in determination of which of the wireless signal from the first tag and the wireless signal from the second tag is viable for locating the position of the object.

In one or more examples, the first tag and the second tag are attached to substantially opposed sides of the object.

In one or more embodiments, the first tag and the second tag form part of a loop comprising three or more tags, the loop configured to attach around the object, the predetermined tag position information comprising the position on the object where each of the three or more tags are attached and the apparatus is caused to provide for determination of at least one tag of the three or more tags that provides a viable wireless signal(s) for use in determining the direction towards the object by the positioning system.

In one or more embodiments, the apparatus is caused to determine whether or not a line of sight between the object and the locator is obscured by a further object, the existence of the line of sight indicative of the viability of the wireless signal for locating the position of the object. In one or more embodiments, the further object is provided with a further tag attached thereto capable of emitting a wireless signal for reception by the at least one locator of the positioning system, and based on determination that the line of sight between the object and the locator is obscured by the further object, provide for, by the positioning system, determination of the location of the object using the location of the further tag, at least for a time that the object is obscured by the further object.

In one or more embodiments, the camera and the locator are co-located. In one or more embodiments, the camera and the locator are non-co-located and the apparatus is provided with the location of the locator relative to the camera, the apparatus caused to provide for determination of the orientation of the object from the point of view of the locator based on the visual imagery.

In one or more examples, the object comprises a person.

In one or more examples, the camera comprises a virtual reality content capture camera.

In one or more examples, the positioning system is configured to determine the location of the tag in the space with respect to the locator.

In one or more examples, the positioning system includes more than one locator at known disparate locations, the apparatus caused to provide for, based on the object orientation information and the predetermined tag position, determination of the viability of the wireless signals for each locator.

In one or more embodiments, the apparatus is caused to provide for a calibration stage prior to determination of the direction towards the object, the calibration stage comprising at least, based on visual imagery from the camera and a predetermined gesture, presented to the camera, that identifies the location of a tag attached to the object, provide for generation of the predetermined tag position information.

In one or more examples, the calibration stage further includes, based on visual imagery from the camera and a predetermined gesture presented to the camera provide for identification of the object. In one or more other examples, the apparatus may be provided with information to enable visual identification of the object in the visual imagery.

In one or more embodiments, the apparatus caused to provide for spatial audio mixing using audio received from the object and the location of the object determined by the positioning system.

In a further aspect there is provided a system comprising a positioning system comprising at least one locator for determining at least the direction towards an object using a tag capable of emitting a wireless signal for reception by the at least one locator, the tag configured to be attached to the object and a camera adapted to capture imagery of the space in which the object is present, the system further comprising the apparatus of any preceding claim.

In a further aspect there is provided a virtual reality content capture apparatus comprising a camera and a positioning system, the positioning system comprising at least one locator and at least one tag, the positioning system configured to determine a location of an object in a space, the tag configured to be attached to the object and capable of emitting a wireless signal for reception by the at least one locator of the positioning system, the positioning system configured to determine the location of the tag based on the wireless signal and thereby the location of the object, and wherein the object is free to move around the space, the positioning system including the apparatus of first example aspect.

In a further aspect there is provided a method, the method comprising;
in respect of determination of a direction towards an object in a space, the object having a tag attached thereto capable of emitting a wireless signal for reception by at least one locator of a positioning system, the positioning system configured to determine the direction towards the tag based on the wireless signal and thereby the direction of the object, and wherein the object is free to move around the space,
based on object orientation information comprising the orientation of the object as viewed by a camera capturing visual imagery of the space in which the object is present and predetermined tag position information comprising the position on the object where the tag is attached,
providing for determination of at least whether or not the object is oriented such that the tag substantially faces the locator to thereby provide for control of the positioning system in the determination of at least a viability of the wireless signal for determining the direction towards the object, the tag substantially facing the locator indicative of the viability of the wireless signal.

In a further aspect there is provided a computer readable medium comprising computer program code stored thereon, the computer readable medium and computer program code being configured to, when run on at least one processor, perform at least the following:
in respect of determination of a direction towards an object in a space, the object having a tag attached thereto capable of emitting a wireless signal for reception by at least one locator of a positioning system, the positioning system configured to determine the direction towards the tag based on the wireless signal and thereby the direction of the object, and wherein the object is free to move around the space,
based on object orientation information comprising the orientation of the object as viewed by a camera capturing visual imagery of the space in which the object is present and predetermined tag position information comprising the position on the object where the tag is attached,
providing for determination of at least whether or not the object is oriented such that the tag substantially faces the locator to thereby provide for control of the positioning system in the determination of at least a viability of the wireless signal for determining the direction towards the object, the tag substantially facing the locator indicative of the viability of the wireless signal.

In a further aspect there is provided an apparatus, the apparatus comprising means,
in respect of determination of a direction towards an object in a space, the object having a tag attached thereto capable of emitting a wireless signal for reception by at least one locator of a positioning system, the positioning system configured to determine the direction towards the tag based on the wireless signal and thereby the direction of the object, and wherein the object is free to move around the space,
based on object orientation information comprising the orientation of the object as viewed by a camera capturing visual imagery of the space in which the object is present and predetermined tag position information comprising the position on the object where the tag is attached,
for providing for determination of at least whether or not the object is oriented such that the tag substantially faces the locator to thereby provide for control of the positioning system in the determination of at least a viability of the wireless signal for determining the direction towards the object, the tag substantially facing the locator indicative of the viability of the wireless signal.

The present disclosure includes one or more corresponding aspects, examples or features in isolation or in various combinations whether or not specifically stated (including claimed) in that combination or in isolation. Corresponding means and corresponding functional units (e.g. single direction of arrival locator) for performing one or more of the discussed functions are also within the present disclosure.

Corresponding computer programs for implementing one or more of the methods disclosed are also within the present disclosure and encompassed by one or more of the described examples.

The above summary is intended to be merely exemplary and non-limiting.

### Brief Description of the Figures

A description is now given, by way of example only, with reference to the accompanying drawings, in which:
figure 1 illustrates an example apparatus, a locator of a positioning system, a camera and an object having a tag attached thereto, the object facing the locator;
figure 2 illustrates the object shown in Figure 1 but oriented such that the object faces away from the locator;
figure 3 illustrates an object having a first tag attached to a front of the object;
figure 4 illustrates an object having a second tag attached to a back of the object;
figure 5 illustrates an example loop of tags with the object oriented such that a front of the object faces the locator;
figure 6 illustrates the object of figure 5 with the object oriented such that a back of the object faces the locator;
figure 7 illustrates an object having a tag and a further object having a further tag;
figure 8 illustrates the further object of figure 7 obscuring the object from the locator and the camera;
figure 9 illustrates a flowchart according to an example method of the present disclosure; and figure 10 illustrates schematically a computer readable medium providing a program.

### Description of Example Aspects

Positioning systems may use the measurements taken by one or more locators to determine the position of an object. In an example positioning system, one or more locators are positioned at disparate geographic locations in a space. To identify the direction towards an object and/or a location of the object in the space, the object may be associated with a tag that is capable of emitting a wireless signal that can be received by the locators. The measurement of the properties of the received signal may be used, such as by methods of triangulation or direction of arrival, to locate the position of the tag in the space relative to the locators. Positioning systems may determine the direction towards an object and/or may determine the location of the object in space. In order for the positioning system to determine the location of the tag relative to the arrangement of the locators, the relative positions of the locators may need to be calibrated.

In one or more examples, a return signal from the tag may be used in the positioning system. For example, a locator may emit a broadcast signal and a tag in receipt of the signal may reply with a signal from which the direction to that tag can be determined. The tag may be passive in that it uses the energy of the broadcast signal to send the return signal. In other example, the tag may include its own power source for use in emitting the return signal, which it may do so at least independently of a locator-broadcast signal. The return signal may include a unique identifier of the tag enabling measurements taken from different locators to be collated and used in the overall positioning of the same object. An example of such a return signal based system comprises a Radio Frequency Identification (RFID) tag based system.

The positioning system may comprise a plurality of Direction of Arrival (DoA) locators and the angle measurements may be used to identify the location of a tag within a local coordinate space defined by the position of the plurality of DoA locators. If the location of the positioning system in a global coordinate space is known then the geographic location of the tag may be determined (such as in terms of a longitude, latitude and altitude).

When capturing a space for presenting as virtual reality (VR) content it may be desirable to track the objects appearing in the space. The positioning system may be used to identify the location of microphones and/or the direction towards microphones within a space when capturing virtual or augmented reality content. The direction towards the object may be the direction from the point of view of the camera i.e. the direction towards the object from the point of view of the VR visual imagery. For example, virtual reality content may include spatial audio where the audio is presented to the consumer of the VR content such that it is perceived as originating from a direction that corresponds to the relevant position in the visual imagery of the VR content. Thus, the voice of an actress may be presented as coming from the same direction as the direction in which the imagery of that actress speaking her dialogue is displayed. Providing such spatial audio may require the location of the object, actress, actor, instrument etc, or a personal microphone thereof to be tracked during virtual reality content capture. Thus, the location/direction of the microphones may be used to render spatial or 3-d audio effects for use in presentation of the content to a user, or to identify the sources of the audio in visual imagery captured by a camera of a virtual reality content capture device (such as a Nokia OZO by Nokia Technologies Oy). The positioning system described herein may be, particularly, a virtual reality content positioning system for locating objects, such as microphones, in a scene during the capture of virtual reality content. Thus, the positioning system may comprise a microphone positioning system. It will be appreciated that the positioning system has more general uses outside the field of virtual reality content capture such as audio source positioning, indoor positioning and positioning in general.

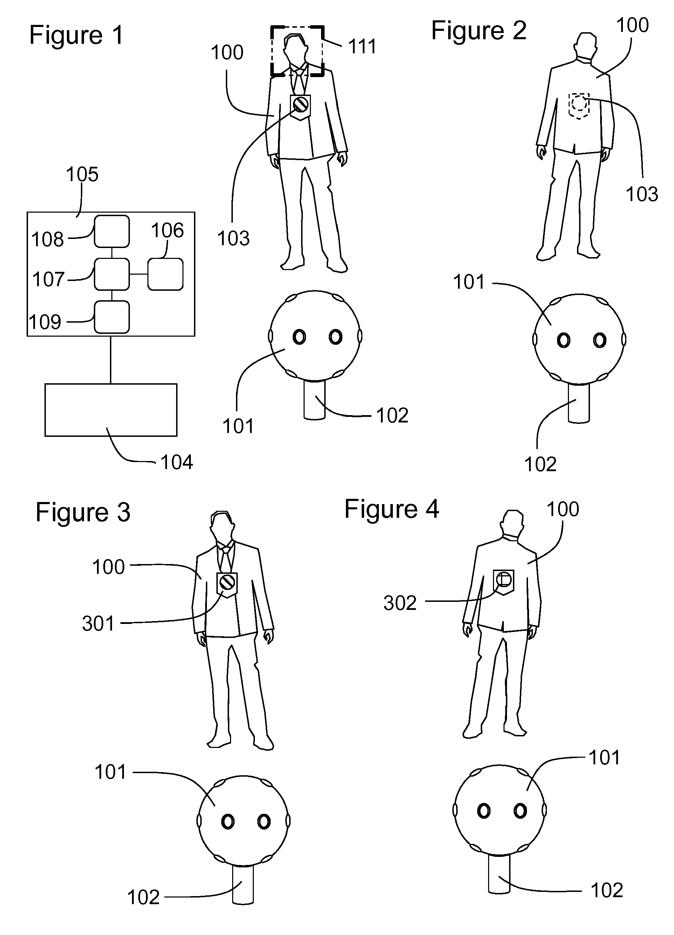

Figure 1 shows an object 100 comprising a person, present within a space. The person 100 is being captured by a virtual reality content capture device 101 (more generally a camera). The direction towards and/or location of the person 100 in the space is determined (in part) by a locator 102. The locator 102, in this example, happens to be co-located with the VR content capture device 101. The person 100 has a positioning tag 103 attached thereto which is configured to emit a wireless signal that can be received by the locator 102 to determine the direction towards the person 100. The tag 103 is typically not visible to the VR content capture device 101 and is shown diagrammatically in the figures herein for understanding. The locator 102 may comprise an antenna and associated circuitry for receiving the wireless signal. In one or more examples, the locator 102 may, in fact, comprise the antenna of the locator, with the circuitry positioned elsewhere. The locator 102 forms part of a positioning system 104 for determining, in this example, the direction towards the object 100 relative to the VR content capture device 101. The positioning system 104 is configured to receive data from the one or more locators 102 and determine the direction towards and/or the location to the object 100 and optionally provide the data for recordal or onward transmission with the VR content captured by the VR content capture device 101. The data may be used for spatial audio or object tracking.

An apparatus 105 is shown that provides for control of the positioning system 104 in determination of at least a viability of the wireless signal from the tag 103 for determining the direction towards the object 100.

The apparatus 105 is in communication with the or each of the locators 102, such as by wireless communication (e.g. Wifi or Bluetooth®). In this example, the locators act as sensors and processing for direction determination and optionally positioning of tags 103 is performed by the positioning system 104. The apparatus 105 is shown separate from the positioning system 104 and in communication therewith but in one or more examples, the apparatus 105 may be integrated with the positioning system. Further, the positioning system 104 itself may be distributed and/or integrated with the one or more locators 102 or VR content capture device 101.

The apparatus 105 comprises a memory 106, a processor 107, an input 108 and an output 109. In this embodiment, only one processor and one memory are shown but it will be appreciated that other embodiments may utilise more than one processor and/or more than one memory (e.g. same or different processor/memory types).

In this embodiment the apparatus 105 is an Application Specific Integrated Circuit (ASIC) for a positioning system. In other embodiments the apparatus 105 can be a module for such a device, or may be the device itself, wherein the processor 107 is a general purpose CPU of the device and the memory 106 is general purpose memory comprised by the device.

The input 108 allows for receipt of signalling to the apparatus 105 from further components, such as the locator 102, the positioning system 104, the VR content capture device 101, visual analysis apparatus (not shown) for processing the visual imagery from the camera or apparatuses related thereto. The output 109 allows for onward provision of signalling from within the apparatus 105 to further components such as the positioning system 104 or a second positioning system (not shown). In this embodiment the input 108 and output 109 are part of a connection bus that allows for connection of the apparatus 105 to further components.

The processor 107 is a general purpose processor dedicated to executing/processing information received via the input 108 in accordance with instructions stored in the form of computer program code on the memory 106. The output signalling generated by such operations from the processor 107 is provided onwards to further components via the output 109

The memory 106 (not necessarily a single memory unit) is a computer readable medium (solid state memory in this example, but may be other types of memory such as a hard drive, ROM, RAM, Flash or the like) that stores computer program code. This computer program code stores instructions that are executable by the processor 107, when the program code is run on the processor 107. The internal connections between the memory 106 and the processor 107 can be understood to, in one or more example embodiments, provide an active coupling between the processor 107 and the memory 106 to allow the processor 107 to access the computer program code stored on the memory 106.

In this example the input 108, output 109, processor 107 and memory 106 are all electrically connected to one another internally to allow for electrical communication between the respective components. In this example the components are all located proximate to one another so as to be formed together as an ASIC, in other words, so as to be integrated together as a single chip/circuit that can be installed into an electronic device. In other examples one or more or all of the components may be located separately from one another.

The apparatus 105 is configured to determine at least whether or not the object 100 is oriented such that the tag 103 substantially faces the locator 102 to thereby provide for control of the positioning system 104 in determination of at least a viability of the wireless signal for determining the direction towards the object, the tag 103 substantially facing the locator 102 indicative of the viability of the wireless signal. It will be appreciated that the tag 103 faces the locator if a side of the tag that faces away from the object to which it is attached substantially faces the locator 102. It will be appreciated that the sensitivity of the locators, the directionality of the transmitter of the tag and the wireless signal strength may all affect the viability of the signal received by the locator. Thus, it may be determined that to provide a viable wireless signal one type of tag may be required to substantially directly face the locator while other tags may have to face the locator in terms of being on the same side of the object as the locator (e.g. not blocked by the object itself, for example) to provide a viable signal. Thus, the apparatus may be configured to determine whether or not the object is oriented such that the tag 103 directly faces the locator 102 within a predetermined threshold, such as an angular threshold of directly facing the locator.

The apparatus 105 may be configured to base said determination on object orientation information comprising the orientation of the object 100 as viewed by the VR content capture device 101 capturing visual imagery of the space in which the object 100 is present. In one or more examples a separate camera may be used to the one capturing the VR content. Further, the determination is based on predetermined tag position information comprising the position on the object 100 where the tag 103 is attached. Accordingly, the apparatus 105 may be provided with tag position information comprising images or models of the object and a designation of where the tag is located. In one or more examples, the tag position information may be such that the object is identified as a person and the position of the tag is identified as being attached to the front, back, etc. of that person. The tag position information may be particular to that person or may be general to any object that comprises a person. It will be appreciated that the tag position information could take many different forms but it should provide for determination of where on the object the tag is attached. In one or more examples, a user of the apparatus 105 / positioning system 104 may be able to specify that any object identified as a person will have a tag on their front. Alternatively, facial recognition or a unique identifier for the tag may be used to specify where on the particular object the tag is located. For example, tag with unique identifier "12345" is located on the front of the person or a particular person, identified to the positioning system (with facial recognition parameters, for example), and tag with unique identifier "54321" is on their back. In one or more examples, a calibration procedure is performed to generate the tag position information which will be described in more detail below.

The apparatus 105 may have a calibration mode in which the objects can be visually identified and the tag position information determined. In one or more examples, a gesture made visible to the camera 101 is used to enter the calibration mode although any other user input may be used to enter said calibration mode. Each person in the space viewable by the camera 101 may point to the position on their body where the tag is located. The pointing gesture may be recognised by the apparatus 105 or a visual analysis apparatus (not shown) in communication with the apparatus 105. Accordingly, this enables the positioning system 104 and/or apparatus 105 to correlate the wireless signal received from the tag to the position pointed at by the person. The apparatus may also capture details to identify the person from facial recognition, posture, gait analysis or any other way. Thus, a link between the unique identifier of the wireless signal of the tag, the identity of the object wearing the tag and where the tag is located on the person may be established. The pointing gesture to indicate the location of a tag can be used to point to other objects or other people. For example, it may be difficult for a person to point to a tag located on their back. Thus, a different person may perform the pointing gesture to a tag of another person. While the generic form of a person may be known to the apparatus such that the orientation can be established from the visual imagery without models specific to that person, in one or more example for people and/or objects it may be necessary to present the object to the camera 101. Thus, for an object of unknown form, the apparatus may provide for characterisation of the shape of the object or its appearance from a plurality of different viewing angles. This may be achieved by presenting the object to the camera 101 and rotating the object so that the apparatus 105 can appreciate the form of the object for providing for subsequent determination of its orientation.

Figure 1 shows the person 100 facing the camera such that their face is visible to the camera 101. Figure 2 shows the same person 100 at a different time facing away from the camera and therefore their face is not visible to the cameral 101. In Figure 2, the tag 103 is shown in dashed lines to demonstrate that it is mounted to the front of the person and therefore the body of the person 100 is between the tag and the locator 102. It will be appreciated that the apparatus 105 and the positioning system 104 are only shown in relation to figure 1 and not all of the figures for brevity. In Figure 1, the wireless signal from the tag 103 may provide a strong wireless signal to the locator 102, as there is an uninterrupted line of sight therebetween. Thus, the positioning locator 102 may receive a viable wireless signal and the positioning system 104 may determine the direction towards the object 100 with an acceptable degree of accuracy. In figure 2, the body of the person 100 may attenuate the wireless signal or may make it difficult for the locator 102 to distinguish the wireless signal from a reflection thereof, which may make determination of the direction towards the object/person 100 by the positioning system 104 error prone.

The apparatus 105 may provide for use of information obtained from the camera 101 to provide for determination of at least whether or not the object 100 is oriented such that the tag 103 substantially faces the locator 102. In one or more examples, the analysis of the visual imagery to determine the orientation of the object may be performed by a visual analysis apparatus (not shown) which may report the orientation information to the apparatus 105 or the apparatus 105 may perform the analysis. Thus, the apparatus 105 may provide for the orientation of the object 100 to be determined from the imagery of the camera 101 by way of comparison with the tag position information. The apparatus 105 may then deduce the viability of the wireless signal for accurately determining the direction to the object 100 within a predetermined accuracy. In this example, the apparatus 105 is configured to provide for control of the positioning system 104 based on the determined likely viability of the wireless signal. The viability (or likely viability) may be deduced based on whether the tag 103 substantially faces the locator 102 or not.

In the example of figure 1 and figure 2, the apparatus 104 is configured to provide for determination of at least whether or not the object is oriented such that the tag substantially faces the locator using facial recognition techniques. It can be seen in Figure 1 that a box 111 has been placed around the face of the person 100 to show that this area of the visual imagery has been identified as a face. Thus, the apparatus 104 may use object orientation information determined by at least facial recognition. Thus, the apparatus 104 or an apparatus in communication therewith may receive the visual imagery from the camera 101 and identify the presence of a person's face in the imagery. If a face is detected then the object orientation may be determined to be "facing the camera 101", as shown in figure 1. If the tag position information is indicative of the tag 103 being attached to the front of the person 100, then the apparatus 105 may determine that the tag 103 is in sight of the locator 102 (i.e. substantially faces the locator) and that the wireless signal received by the locator 102 from the tag 103 is viable for determination of the direction towards the object 100. With reference to figure 2, if a face is not detected then the object orientation may be determined to be "facing away from the camera 101", as shown in figure 2. If the tag position information is indicative of the tag 103 being attached to the front of the person 100, then the apparatus 105 may determine that the tag 103 is not in sight of the locator 102 (i.e. does not substantially face the locator) and that the viability of the wireless signal received by the locator 102 from the tag 103 may be questionable. Accordingly, it may be deduced that the positioning system 104 may generate inaccurate results if it were to use the wireless signal when the object 100 is oriented as in figure 2. Thus, the apparatus 105 may control the positioning system not to determine the direction and/or may provide for use of other means to determine the direction towards the object 100. For example, a different positioning system (not shown) that uses visual tracking from the camera 101 imagery may be used to determine the location at least until the apparatus 105 determines that the wireless signal is viable.

Thus, possible action to take if the viability of the wireless signal may be questionable may be one or more of:
(a) use the wireless signal received by a different locator (not shown);
(b) use the wireless signal received by a greater number of locators (not shown);
(c) use a different direction and/or position determination technique, such as visual tracking;
(d) use enhanced processing techniques of the wireless signal received by the locator 102 to improve the accuracy of the direction determination relative to what is used when the wireless signal is deemed viable.

Thus, the positioning system may use a first sampling rate and/or processing rate when the wireless signal is determined to be viable and a second, higher, sampling rate and/or processing rate when the viability of the wireless signal is determined to be questionable. This may enable an acceptable level of accuracy to be maintained.

In one or more examples, the tag position information may designate a side (i.e. front, back , left side, right side) of a person on which the tag is attached. The positioning system may receive a wireless signal from a tag 103. The positioning system may then determine what appears to be the direction towards the object 100, referred to as the "possible direction" for clarity. The apparatus 105 or an apparatus that performs visual analysis of the imagery from the camera 101 may then use the possible direction to analyse a portion of the visual imagery (less than the total area of visual imagery, for example). If the visual analysis identifies a person in the portion of the visual imagery around the "possible direction" and the orientation of the object and tag position information indicate the tag 103 is in sight of the locator 101, then the "possible direction" may be confirmed as the direction towards the object. This direction may then be used for object tracking, spatial audio rendering or other purposes. If, on the other hand, the orientation of the object and tag position information indicate the tag 103 is not in sight of the locator 101, then the wireless signal used to determine the possible direction may be determined not to be viable and the possible direction may be disregarded as the direction towards the object 100.

In one or more examples, the tag position information may designate a side (i.e. front, back , left side, right side) of a person on which the tag is attached as well as information to enable visual identification of the object. The positioning system 104 may receive a wireless signal from the tag 103, which may include a unique identifier of the tag. The unique identifier may enable the apparatus 105 to visually determine (itself or via another apparatus) the object 100 with which that tag 103 is associated. The positioning system 104 may determine what appears to be the direction towards the object 100, referred to as the "possible direction" for clarity. Given that the appearance of the object is known, the apparatus 105 or an apparatus that performs visual analysis of the imagery from the camera 101 may identify the object 100 in the imagery and determine the orientation of the object (the possible direction may be used to analyse a portion of the visual imagery or not). Accordingly, the viability of the wireless signal may be deduced and therefore the possible direction may be confirmed as the direction towards the object or disregarded. In this example, given the appearance of the object is known, a direction towards the object may be determined from visual analysis. Thus, if the orientation of the object 100 is such that the viability of the wireless signal is questionable, but the object is also identified by visual analysis, a combination of the direction determined from the wireless signal by the positioning system 104 and the direction determined from visual analysis may be combined to determine the direction towards the object 100. In one or more examples, only the visually determined direction may be determined to be the direction towards the object 100. If the wireless signal is determined to be viable only the wireless signal may be used to determine the direction towards the object (i.e. not using the visually determined direction).

In the examples herein, the locator 102 and the camera 101 are co-located but in one or more other examples, they may not be. With knowledge of the position of the locator 102 with respect to the camera, the visual analysis of the video imagery can be performed to take account of the orientation of the object relative to the locator.

In one or more examples, as described above, the determination of whether or not the object is oriented such that the tag substantially faces the locator 102 is performed using facial recognition of the visual imagery. In one or more examples, the determination of whether or not the object is oriented such that the tag substantially faces the locator 102 may be performed by body posture analysis. Thus, the orientation of the object, when comprising a person, may be performed by analysis of the posture of the person 100 in the visual imagery in addition to or independent of facial recognition. The use of body posture analysis may be advantageous. For example, a person who's body is facing the locator 102 (with the tag 103 attached to their chest) but have turned their head to the side may not be recognised as facing the locator 102 when using only facial recognition techniques and therefore the viability of the wireless signal may be deemed non-viable for positioning. However, to the contrary, in reality the tag 103 would be facing the locator 102 and the signal may be viable for positioning. When account is taken of body posture, the part of the body on which the tag 103 is located may be considered for determination of wireless signal viability.

Thus, the apparatus 105 may be caused to provide for determination of at least whether or not the object is oriented such that the tag substantially faces the locator 102 based on one or more of;
if the object is a person,
i) face detection;
ii) posture detection;
iii) full body orientation detection;
and, for objects in general;
iv) based on predetermined object-form information relating to the object on which the tag is located.

The object-form information may comprise imagery of the object from different viewing direction or a 3-dimensional model of the object or data indicative thereof.

Figures 3 and 4 shows the person 100 having two positioning tags 301, 302 attached to them. A first tag 301 is attached to their front (their chest) and a second tag 302 is attached to their back. The locator 102 may be configured to distinguish between the wireless signal received from the first tag 301 and the wireless signal received from the second tag 302. For example, the form of the signal may be different or the wireless signal may include a unique identifier. In this example, each tag 301, 302 includes a unique identifier which is encoded in the wireless signal.

As in the previous example, the object orientation information may provide a "side" of the person facing the locator 102 (or the orientation relative to the camera from which the orientation of the object relative to the locator can be determined based on information regarding the location of the locator relative to the camera). The predetermined tag position information may indicate that the first tag 301 is attached to the front side of the person and the second tag 302 is attached to the back of the person 100. Accordingly, the apparatus 104 may be caused to provide for determination of at least whether or not the object 100 is oriented such that the first tag 301 substantially faces the locator 102 and whether or not the second tag 302 substantially faces the locator 102. The apparatus may provide for selection of which tag, the first tag 301 or the second tag 302, may provide the more viable wireless signal for determining the direction to the object 100. In Figure 3, the first tag 301 substantially faces the locator 102 indicating the viability of the wireless signal, while the second tag 302 is obscured. In Figure 4, the second tag 302 substantially faces the locator 102 indicating the viability of its wireless signal, while the first tag 301 is obscured. Thus, in this example, the apparatus 105 is caused to provide for determination of which of the first tag 301 and the second tag 302 substantially faces the locator 102 to thereby provide for control of the positioning system 104 in determination of which of the wireless signal from the first tag and the wireless signal from the second tag may be more viable for locating the position of the object 100. Thus, with the orientation of the person 100 as shown in Figure 3, the apparatus 105 may select the first tag 301 and with the orientation of the person 100 as shown Figure 4, the apparatus 105 may select the second tag 302. The positioning system 104 may be controlled to use the wireless signal received from the selected tag preferentially to the other in determination of the direction towards the person 100.

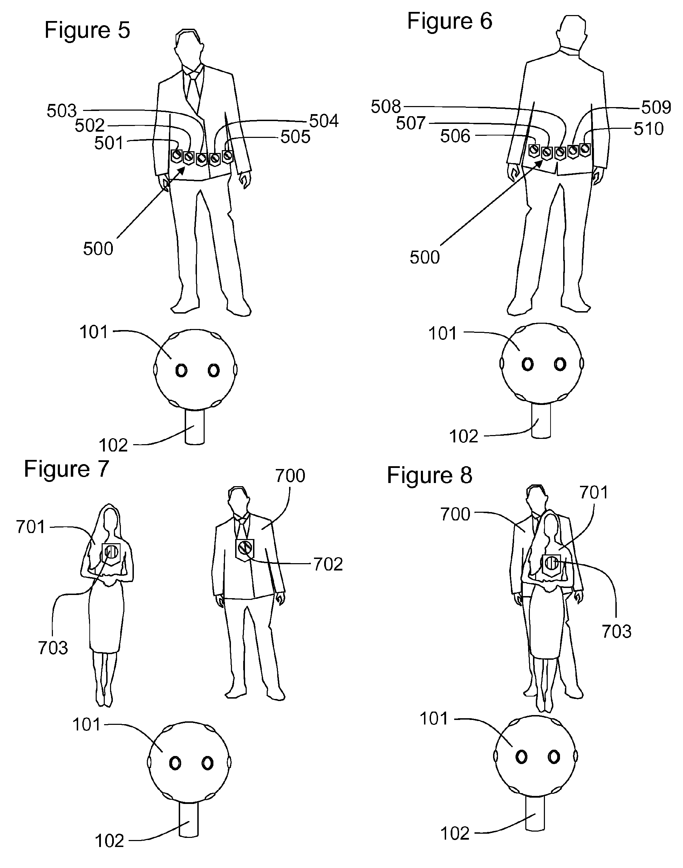

Figures 5 and 6 show the person 100 in two different orientations wherein Figure 5 shows the person facing the camera 101 and the locator 102 and Figure 6 shows the person facing away from the camera 101 and locator 102. In one or more examples, similar to as shown in Figures 3 and 4, the object 100 may have a plurality of tags attached thereto each capable of emitting a wireless signal for receipt by the locator 102. Figures 5 and 6 show the person 100 wearing a belt 500 of positioning tags where first through to fifth tags 501-505 are visible in Figure 5 and sixth through to tenth tags 506-510 are visible in Figure 6.

In this example, the apparatus 105 may be caused to provide for determination of the orientation of the body of the person 100 or, more generally, the orientation of the object. Using the tag position information comprising the position of each tag 501-510 relative to the person 100, the apparatus may determine which single tag or subset of tags of the plurality of tags (potentially) provides the most viable wireless signal for direction determination by the positioning system 104. The apparatus 105 may then control the positioning system 104 to use the wireless signal from the tags deemed viable or most viable in preference to the remaining tags attached to the object 100.

It will be appreciated that in the above examples the tag that faces the locator 102 may be considered to provide a viable wireless signal by virtue of its wireless signal appearing to have the least hindrance (or a lower hindrance than others) to reach the locator 102. In the above embodiments, particularly but not exclusively where a single tag is used or a plurality of tags that are sparsely distributed around the object, a particular tag may be deemed to face the locator if the object is oriented such that the particular tag would be one or more of;
(a) visible to the locator 102;
(b) not blocked by the object 100;
(c) directly facing the locator within a threshold angle of rotation of the object;
(d) directly facing the locator 102; and
(e) not blocked by further object.

Figures 7 and 8 and two objects comprising a first person 700 and a second person 701. The first person 700 has a first positioning tag 702 attached thereto and the second person 701 has a second positioning tag 703 attached thereto.

In Figure 7, the first person 700 and the second person 701 are positioned relative to one another such that the persons 700, 701 do not obscure the tag of the other person. Further, both the first person 700 and the second person 701 are oriented such that the locator 102 has sight of the first tag 702 and the second tag 703. Thus, the wireless signal from the first tag 702 and the wireless signal from the second tag 703 may be deemed viable by the apparatus 105 and may be used by the positioning system 104 for determination of the direction to the persons 700, 701.

In Figure 8, the second person 701 has strayed in front of the first person 700 and obscured the first tag 702 from the sight of the locator 102. Thus, the wireless signal from the second tag 703 may be viable for determining the direction towards the second person 701, the wireless signal from the first tag 702 may be prone to error.

In one or more examples, the apparatus 105 may be caused to provide for determination of whether or not the tag 702 is obscured. Thus, the apparatus 105 may be further caused to provide for determination of whether or not the object is obscured as viewed by the camera 101 capturing visual imagery of the space in which the object 700 is present based on object-obscured information. Accordingly, the apparatus may therefore provide for control of the positioning system based on whether or not the object is oriented such that the tag substantially faces the locator and whether or not the object is obscured by another object. The object having an orientation such that the tag faces the locator and being unobscured by other objects being indicative of the viability of the wireless signal. The apparatus 105 may provide for the visual analysis of the imagery from the camera 101 and therefore generate the object-obscured information or the apparatus 105 may receive the object-obscured information from a further apparatus (not shown) that performs the visual analysis of the imagery to determine the obscured status of the object and provides the result as the object-obscured information to the apparatus 105.

As described above, the control of the positioning system may provide for various actions to be taken. In addition to those actions or independent thereof, if the further object that obscures the object in question has a tag itself, the tag of the further object may be used, by the positioning system 104, to determine the direction towards both the further object and the object in question, as described below.

In one or more examples, the apparatus 105, based on a determination that the first object 700 is obscured by the second object 701, wherein both the first object 700 and the second object 701 have a tag attached thereto, may be caused to provide for control of the positioning system to use the wireless signal from the second object 701 to provide for determination of the direction to the first object 700. Thus, the object-obscured information may be indicative of the first object 700 being obscured and therefore the viability of the wireless signal from the first tag 702 may be deemed questionable. The apparatus 105 may provide for identification of the second object 701 using the imagery from the camera 101 and, on visual identification of the second object 701, provide for determination of which tag is attached to the second (obscuring) object 701 using the tag position information. The control of the positioning system may then provide for use of the wireless signal from the tag of the second (obscuring) object in determination of the direction towards the first (obscured) object 700. It will be appreciated that the control of the positioning system as described may be dependent on the second object 701 being oriented such that their tag 703 faces the locator 102.

Maybe we should add another possibility. It is possible that in this kind of blocking situation second object 701 is very close to the camera and first object is quite far. Then it is not very reasonable to use tag 703 information as such.

In one or more examples, such as, but not exclusively, examples where the position of the tag is determined rather than just the direction towards the tag, the distance between the obscured and obscuring object may be considered. If the first and second objects 700, 701 are close together (closer than a threshold), the position of the tag of the second object 701 may be used to position the first object. However, if the first object 700 is further away (more than a threshold distance) than the second object 701 (or in all instances irrespective of distance between the first and second objects) other techniques may be used. For example, if the first object 700 is obscured by second object 701, the direction information of tag 703 of the second object 701 may be used, but other methods to identify the distance of first object 700 may be used. For example, historical information of the location of the first object 700 may be used and an estimate of the current distance determined. The estimate may be based on one or more of the direction and/or speed of movement of the first object prior to being obscured so an estimate of the distance can be determined assuming the object remains on the same path, the relative size in the visual imagery of parts of the first object that are visible relative to when the first object was unobscured to determine a change in distance.

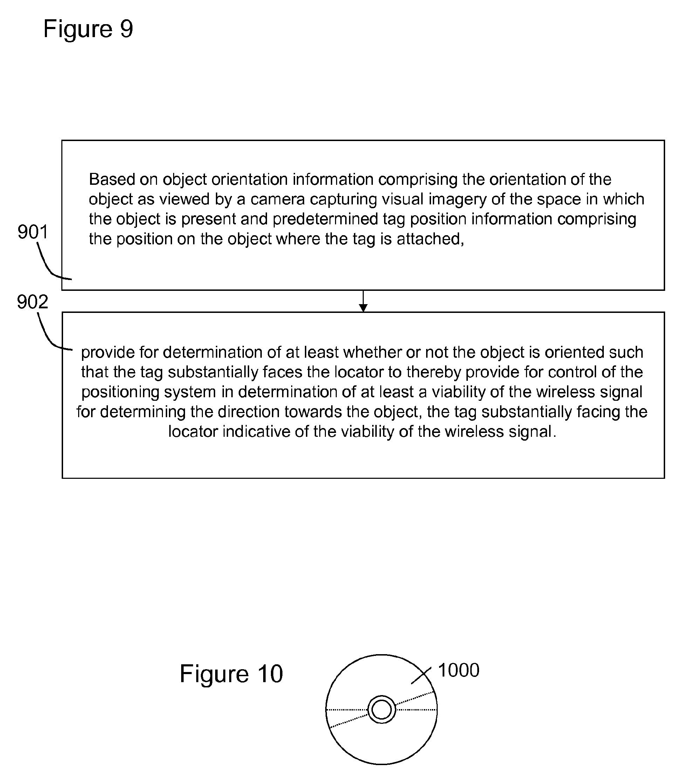

Figure 9 shows a flow diagram illustrating the steps of based on 901 object orientation information comprising the orientation of the object as viewed by a camera capturing visual imagery of the space in which the object is present and predetermined tag position information comprising the position on the object where the tag is attached, provide for 902 determination of at least whether or not the object is oriented such that the tag substantially faces the locator to thereby provide for control of the positioning system in determination of at least a viability of the wireless signal for determining the direction towards the object, the tag substantially facing the locator indicative of the viability of the wireless signal.

Figure 10 illustrates schematically a computer/processor readable medium 1000 providing a program according to an example. In this example, the computer/processor readable medium is a disc such as a digital versatile disc (DVD) or a compact disc (CD). In other examples, the computer readable medium may be any medium that has been programmed in such a way as to carry out an inventive function. The computer program code may be distributed between the multiple memories of the same type, or multiple memories of a different type, such as ROM, RAM, flash, hard disk, solid state, etc.

The apparatus shown in the above examples may be a portable electronic device, a laptop computer, a mobile phone, a Smartphone, a tablet computer, a personal digital assistant, a digital camera, a smartwatch, smart eyewear, a pen based computer, a non-portable electronic device, a desktop computer, a monitor, a household appliance, a smart TV, a server, a wearable device or a module/circuitry for one or more of the same.

Any mentioned apparatus/device/server and/or other features of particular mentioned apparatus/device/server may be provided by apparatus arranged such that they become configured to carry out the desired operations only when enabled, e.g. switched on, or the like. In such cases, they may not necessarily have the appropriate software loaded into the active memory in the non-enabled (e.g. switched off state) and only load the appropriate software in the enabled (e.g. on state). The apparatus may comprise hardware circuitry and/or firmware. The apparatus may comprise software loaded onto memory. Such software/computer programs may be recorded on the same memory/processor/functional units and/or on one or more memories/processors/ functional units.

In some examples, a particular mentioned apparatus/device/server may be pre-programmed with the appropriate software to carry out desired operations, and wherein the appropriate software can be enabled for use by a user downloading a "key", for example, to unlock/enable the software and its associated functionality. Advantages associated with such examples can include a reduced requirement to download data when further functionality is required for a device, and this can be useful in examples where a device is perceived to have sufficient capacity to store such pre-programmed software for functionality that may not be enabled by a user.

Any mentioned apparatus/circuitry/elements/processor may have other functions in addition to the mentioned functions, and that these functions may be performed by the same apparatus/circuitry/elements/processor. One or more disclosed aspects may encompass the electronic distribution of associated computer programs and computer programs (which may be source/transport encoded) recorded on an appropriate carrier (e.g. memory, signal).

Any "computer" described herein can comprise a collection of one or more individual processors/processing elements that may or may not be located on the same circuit board, or the same region/position of a circuit board or even the same device. In some examples one or more of any mentioned processors may be distributed over a plurality of devices. The same or different processor/processing elements may perform one or more functions described herein.

The term "signalling" may refer to one or more signals transmitted as a series of transmitted and/or received electrical/optical signals. The series of signals may comprise one, two, three, four or even more individual signal components or distinct signals to make up said signalling. Some or all of these individual signals may be transmitted/received by wireless or wired communication simultaneously, in sequence, and/or such that they temporally overlap one another.

With reference to any discussion of any mentioned computer and/or processor and memory (e.g. including ROM, CD-ROM etc), these may comprise a computer processor, Application Specific Integrated Circuit (ASIC), field-programmable gate array (FPGA), and/or other hardware components that have been programmed in such a way to carry out the inventive function.

The applicant hereby discloses in isolation each individual feature described herein and any combination of two or more such features, to the extent that such features or combinations are capable of being carried out based on the present specification as a whole, in the light of the common general knowledge of a person skilled in the art, irrespective of whether such features or combinations of features solve any problems disclosed herein, and without limitation to the scope of the claims. The applicant indicates that the disclosed aspects/examples may consist of any such individual feature or combination of features. In view of the foregoing description it will be evident to a person skilled in the art that various modifications may be made within the scope of the disclosure.

While there have been shown and described and pointed out fundamental novel features as applied to examples thereof, it will be understood that various omissions and substitutions and changes in the form and details of the devices and methods described may be made by those skilled in the art without departing from the scope of the disclosure. For example, it is expressly intended that all combinations of those elements and/or method steps which perform substantially the same function in substantially the same way to achieve the same results are within the scope of the disclosure. Moreover, it should be recognized that structures and/or elements and/or method steps shown and/or described in connection with any disclosed form or examples may be incorporated in any other disclosed or described or suggested form or example as a general matter of design choice. Furthermore, in the claims means-plus-function clauses are intended to cover the structures described herein as performing the recited function and not only structural equivalents, but also equivalent structures. Thus although a nail and a screw may not be structural equivalents in that a nail employs a cylindrical surface to secure wooden parts together, whereas a screw employs a helical surface, in the environment of fastening wooden parts, a nail and a screw may be equivalent structures.

## Claims

1. An apparatus comprising:
at least one processor; and
at least one memory including computer program code,
the at least one memory and the computer program code configured to, with the at least one processor, cause the apparatus to perform at least the following:
in respect of determination of a direction towards an object in a space, the object having a positioning tag attached thereto capable of emitting a wireless signal for reception by at least one locator of a positioning system, the positioning system configured to determine the direction towards the positioning tag based on the wireless signal and thereby the direction of the object, and wherein the object is free to move around the space,
based on object orientation information comprising the orientation of the object as viewed by a camera capturing visual imagery of the space in which the object is present and predetermined tag position information comprising the position on the object where the positioning tag is attached,
provide for determination of at least whether or not the object is oriented such that the positioning tag substantially faces the locator to thereby provide for control of the positioning system in the determination of at least a viability of the wireless signal for determining the direction towards the object, the positioning tag substantially facing the locator indicative of the viability of the wireless signal.

2. The apparatus of claim 1 wherein based on a determination that the object is oriented such that the tag substantially faces away from the locator and thereby that the wireless signal from said tag is not viable for use in determining the direction by the positioning system, provide for determination of the direction towards the object by means other than those that use the wireless signal.

3. The apparatus of claim 1 or claim 2 wherein the object comprises a person and determination of at least whether or not the object is oriented such that the tag substantially faces the locator is based on one or more of;
iv) face detection;
v) body orientation detection;
vi) skeletal motion tracking.

4. The apparatus of any preceding claim wherein the object is provided with more than one tag comprising at least a first tag and a second tag, the first and second tags attached at different positions on the object, and wherein the predetermined tag position information comprises the position on the object where the first tag is attached and the position on the object where the second tag is attached, the apparatus caused to provide for determination of which of the first tag and the second tag substantially faces the locator to thereby provide for control of the positioning system in determination of which of the wireless signal from the first tag and the wireless signal from the second tag is viable for locating the position of the object.

5. The apparatus of claim 4 wherein the first tag and the second tag form part of a loop comprising three or more tags, the loop configured to attach around the object, the predetermined tag position information comprising the position on the object where each of the three or more tags are attached and the apparatus is caused to provide for determination of at least one tag of the three or more tags that provides a viable wireless signal(s) for use in determining the direction towards the object by the positioning system.

6. The apparatus of any preceding claim wherein the apparatus is caused to determine whether or not a line of sight between the object and the locator is obscured by a further object, the existence of the line of sight indicative of the viability of the wireless signal for locating the position of the object.

7. The apparatus of claim 6 wherein the further object is provided with a further tag attached thereto capable of emitting a wireless signal for reception by the at least one locator of the positioning system, and based on determination that the line of sight between the object and the locator is obscured by the further object, provide for, by the positioning system, determination of the location of the object using the location of the further tag, at least for a time that the object is obscured by the further object.

8. The apparatus of any preceding claim wherein the camera and the locator are co-located.

9. The apparatus of any preceding claim wherein the camera and the locator are non-co-located and the apparatus is provided with the location of the locator relative to the camera, the apparatus caused to provide for determination of the orientation of the object from the point of view of the locator based on the visual imagery.

10. The apparatus of any preceding claim wherein the camera comprises a virtual reality content capture camera.

11. The apparatus of any preceding claim wherein the apparatus is caused to provide for a calibration stage prior to determination of the direction towards the object, the calibration stage comprising at least, based on visual imagery from the camera and a predetermined gesture, presented to the camera, that identifies the location of a tag attached to the object provide for generation of the predetermined tag position information.

12. The apparatus of any preceding claim where in the apparatus caused to provide for spatial audio mixing using audio received from the object and the location of the object determined by the positioning system.

13. A virtual reality content capture apparatus comprising a camera and a positioning system, the positioning system comprising at least one locator and at least one tag, the positioning system configured to determine a location of an object in a space, the tag configured to be attached to the object and capable of emitting a wireless signal for reception by the at least one locator of the positioning system, the positioning system configured to determine the location of the tag based on the wireless signal and thereby the location of the object, and wherein the object is free to move around the space, the positioning system including the apparatus of any preceding claim.

14. A method comprising;
in respect of determination of a direction towards an object in a space, the object having a tag attached thereto capable of emitting a wireless signal for reception by at least one locator of a positioning system, the positioning system configured to determine the direction towards the tag based on the wireless signal and thereby the direction of the object, and wherein the object is free to move around the space,
based on object orientation information comprising the orientation of the object as viewed by a camera capturing visual imagery of the space in which the object is present and predetermined tag position information comprising the position on the object where the tag is attached,
providing for determination of at least whether or not the object is oriented such that the tag substantially faces the locator to thereby provide for control of the positioning system in the determination of at least a viability of the wireless signal for determining the direction towards the object, the tag substantially facing the locator indicative of the viability of the wireless signal.

15. A computer readable medium comprising computer program code stored thereon, the computer readable medium and computer program code being configured to, when run on at least one processor, perform at least the following:
in respect of determination of a direction towards an object in a space, the object having a tag attached thereto capable of emitting a wireless signal for reception by at least one locator of a positioning system, the positioning system configured to determine the direction towards the tag based on the wireless signal and thereby the direction of the object, and wherein the object is free to move around the space,
based on object orientation information comprising the orientation of the object as viewed by a camera capturing visual imagery of the space in which the object is present and predetermined tag position information comprising the position on the object where the tag is attached,
providing for determination of at least whether or not the object is oriented such that the tag substantially faces the locator to thereby provide for control of the positioning system in the determination of at least a viability of the wireless signal for determining the direction towards the object, the tag substantially facing the locator indicative of the viability of the wireless signal.
